# EUROPÄISCHE PATENTSCHRIFT

(11) **EP 1 413 034 B1**
(45) Veröffentlichungstag und Bekanntmachung des Hinweises auf die Patenterteilung: **27.02.2008**
(21) Anmeldenummer: 02762303.2
(22) Anmeldetag: 26.06.2002
(51) Int. Cl.: H02G 3/30

(54) **VORRICHTUNG ZUR BEFESTIGUNG VON FLACHBANDKABELN AN EINER TRÄGERPLATTE**
DEVICE FOR FIXING FLAT CABLES TO A CARRIER PLATE
DISPOSITIF DE FIXATION DE CABLES PLATS SUR UNE PLAQUE DE SUPPORT

(30) Priorität: 18.07.2001 DE 10134875
(43) Veröffentlichungstag der Anmeldung: 28.04.2004
(73) Patentinhaber: A. RAYMOND ET CIE, 38000 Grenoble (FR)
(72) Erfinder: DE GELIS, Vincent, F-38100 Grenoble (FR)
(74) Vertreter: Rüttgers, Joachim
(86) Internationale Anmeldenummer: PCT/EP2002/007036
(87) Internationale Veröffentlichungsnummer: WO 2003/009442

(56) Entgegenhaltungen:
- DE-A- 19 958 212
- JP-A- 7 031 043
- US-A- 4 192 965

## Beschreibung

Die Erfindung betrifft eine aus DE 199 58 212 A1 bekannte Vorrichtung, welche dazu dient, Flachbandkabel an einer Trägerplatte exakt im Winkel zu verlegen und zu befestigen. Diese Vorrichtung besteht im wesentlichen aus einer kreuzförmig ausgebildeten, flachen Grundplatte aus hartelastischem Kunststoff mit einem viereckigen Mittelfeld, von dem aus sich vier Fortsätze paarweise einander gegenüberliegend erstrecken, sowie aus einer diagonal durch das Mittelfeld verlaufenden Ausnehmung, um welche die Fortsätze derart faltbar sind, daß jeweils zwei benachbarte Fortsätze zur Deckung gelangen und in dieser Stellung arretierbar sind. Über einen Teil des Mittelfeldes erhebt sich eine zum Umbiegen des Fachbandkabels dienende Platte, deren Biegekante parallel zur Grundkante der Ausnehmung verläuft.

Diese Vorrichtung bietet die Möglichkeit, daß nach dem Einlegen des Flachbandkabels unter die Biegeplatte und Übereinanderfalten der benachbarten Fortsätze das Flachbandkabel mittels der Biegekante schonend in die vorgesehene Richtung gebogen werden kann. Bei dieser Vorrichtung wird es jedoch als Nachteil empfunden, daß das Flachbandkabel nur in eine einzige Richtung weggebogen werden kann. Auch ist eine geradlinige Verlegung der Flachbandkabel mit der bekannten Vorrichtung nicht vorgesehen, so daß man drei verschiedene Befestigungsvorrichtungen benötigt, um ein Verlegen des Flachbandkabels nach rechts, nach links oder geradeaus zu bewerkstelligen.

Aufgabe der Erfindung ist es, die vorgenannte Vorrichtung so zu gestalten, daß das Flachbandkabel zumindest in zwei entgegengesetzte Richtungen weggebogen und geradeaus verlegt werden kann. Zu diesem Zweck wird bei der erfindungsgemäß vorgeschlagenen Vorrichtung die bestehende Ausnehmung von einer zweiten diagonal verlaufenden Ausnehmung gekreuzt, um welche die Fortsätze in jeweils anderer Paarung ebenfalls faltbar sind. Außerdem ist an die Biegeplatte eine zweite Platte angewinkelt, deren Biegekante zur Grundkante der zweiten Ausnehmung ebenfalls parallel verläuft.

In der Zeichnung ist ein Ausführungsbeispiel der Erfindung dargestellt und soll nachfolgend näher beschrieben werden. Es zeigen:
- Fig. 1: Eine Draufsicht auf die Befestigungsvonichtung zur Verlegung von Flachbandkabeln in noch offenem Zustand,
- Fig. 2: Eine Seitenansicht hierzu in Richtung des Pfeiles A,
- Fig. 3: Eine Draufsicht auf die Befestigungsvonichtung in zusammengeklapptem Zustand mit eingelegtem Flachbandkabel,
- Fig. 4: Eine Seitenansicht hierzu in Richtung des Pfeiles B,
- Fig.5: Einen Schnitt durch die zusammengeklappte Befestigungs' vorrichtung gemäß Linie V - V in Fig. 3,
- Fig. 6: Eine offene Befestigungsvorrichtung mit in der linken Hälfte eingelegtem Flachbandkabel,
- Fig. 7: Die zusammengeklappte Befestigungsvorrichtung mit nach rechts gebogenem Flachbandkabel,
- Fig. 8: Eine weitere offene Befestigungsvorrichtung mit in der rechten Hälfte eingelegtem Flachbandkabel,
- Fig. 9: Die zusammengeklappte Befestigungsvorrichtung mit nach links gebogenem Flachbandkabel,
- Fig. 10: Eine weitere offene Befestigungsvorrichtung mit in beiden Hälften eingelegten Flachbandkabeln und
- Fig. 11: Die zusammengeklappte Befestigungsvorrichtung mit einem geradeaus geführten und einem nach rechts gebogenen Flachbandkabel.

Die in den Figuren dargestellte Befestigungsvorrichtung dient zum Verlegen von Flachbandkabeln - und zwar sowohl rechtwinklig nach beiden Seiten gebogen als auch geradlinig geführt - und zur Befestigung auf einer Trägerplatte, z.B. einem Karosserieteil eines Kraftfahrzeugs.

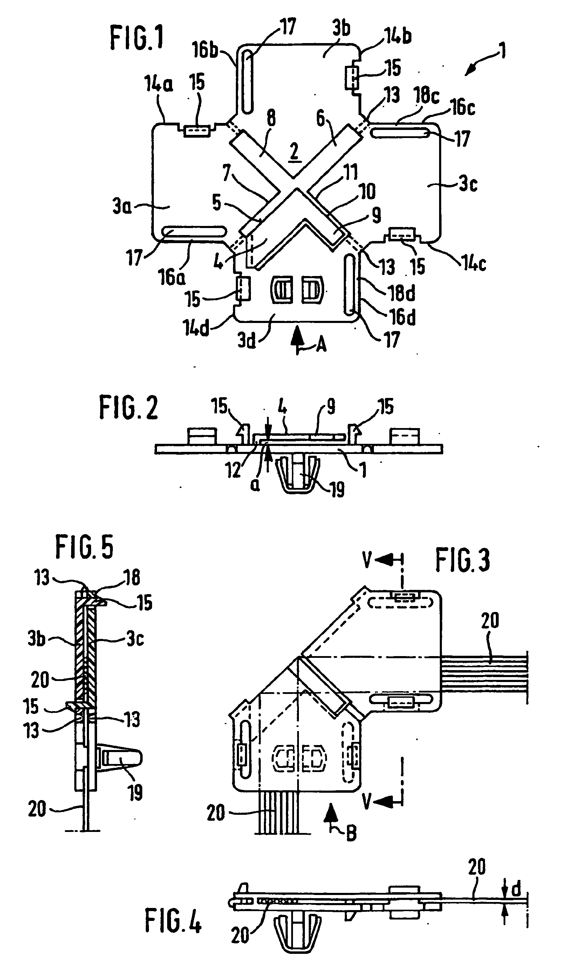

Gemäß **Figur 1** besteht die Vorrichtung aus einer kreuzförmig ausgebildeten, flachen Grundplatte **1** aus hartelastischem Kunststoff mit einem viereckigen Mittelfeld 2, von dem aus sich vier Fortsätze **3a, 3b, 3c, 3d** paarweise einander gegenüberliegend erstrecken. Diagonal durch das Mittelfeld **2** verlaufen zwei sich rechtwinklig kreuzende Ausnehmungen **6** und **8,** wobei die einzelnen Fortsätze **3a, 3b, 3c, 3d** beiderseits der Ausnehmungen **6** und **8** durch schwächer ausgebildete Verbindungsstege **13** faltbar miteinander verbunden sind. Hierdurch ist es möglich, die Fortsätze jeweils paarweise zur Deckung zu bringen, und zwar sowohl die Fortsätze **3a** und **3b** mit den Fortsätzen **3c** und **3d** als auch die Fortsätze **3b** und **3c** mit den Fortsätzen **3a** und **3d.**

Über einen Teil des Mittelfeldes **2** erhebt sich eine zum Umbiegen des Flachbandkabels **20** dienende Platte **4,** deren Biegekante **5** sich bis etwa zur Mittelachse der Grundplatte **1** erstreckt und parallel zur Grundkante **7** der Ausnehmung **6** verläuft. An diese Biegeplatte **4** ist eine zweite Biegeplatte **9** angewinkelt, deren Biegekante 10 parallel zur Grundkante **11** der gekreuzten Ausnehmung **8** verläuft. Die Biegeplatte **4** ist hierbei, wie aus **Figur 2** ersichtlich, mit der Grundplatte **1** durch einen Quersteg **12** verbunden, welcher seitlich an einem der Fortsätze **3a bis 3d** parallel zur Mittelachse angeformt ist. Der Abstand a der Biegeplatten **4** und **9** von der Grundplatte **1** ist zweckmäßigerweise so bemessen, daß er der Dicke d des Flachbandkabels **20** entspricht (vgl. **Fig. 3 bis 5**).

Um die paarweise zusammengeklappten Fortsätze zu arretieren, sind an den Fortsätzen **3a bis 3d** an jeweils einer Seitenkante **14a** bis **14d** Rasthaken **15** im rechten Winkel angeformt, während an der jeweils gegenüberüegenden Seitenkante **16a bis 16d** Schlitze **17** derart eingeformt sind, daß die bis zu den Seitenkanten **16a** bis **16d** verbleibenden Stege **18a bis 18d** beim Eindrücken der Rasthaken **15** etwas federn nachgeben und nach dem Einschnappen der Rasthaken **15** wieder zurückfedern (vgl. **Fig. 5**).

Wie insbesondere aus den **Figuren 2 und 5** zu ersehen, ist an der Unterseite des eines Fortsatzes **3d** ein sogenannter Befestigungsfuß **19** angeformt, der mit in einer nicht dargestellten Trägerplatte vorgesehenen Befestigungslöchern in Eingriff gebracht werden kann. Es versteht sich, daß anstelle des Befestigungsfußes **19** auch andere gängige Verbindungsarten wie beispielsweise Schraub- oder Klebeverbindungen gewählt werden können, um die Grundplatte **1** auf der Trägerplatte zu verankern.

Um mit dieser Befestigungsvorrichtung ein Flachbandkabel **20** in der gewünschten Richtung zu verlegen, wird dieses Kabel **20** von dem Fortsatz **3d** aus über das Mittelfeld **2** und den Fortsatz **3b** zunächst von der Seite unter einer der Biegeplatten **4** oder **9** hindurchgeschoben.

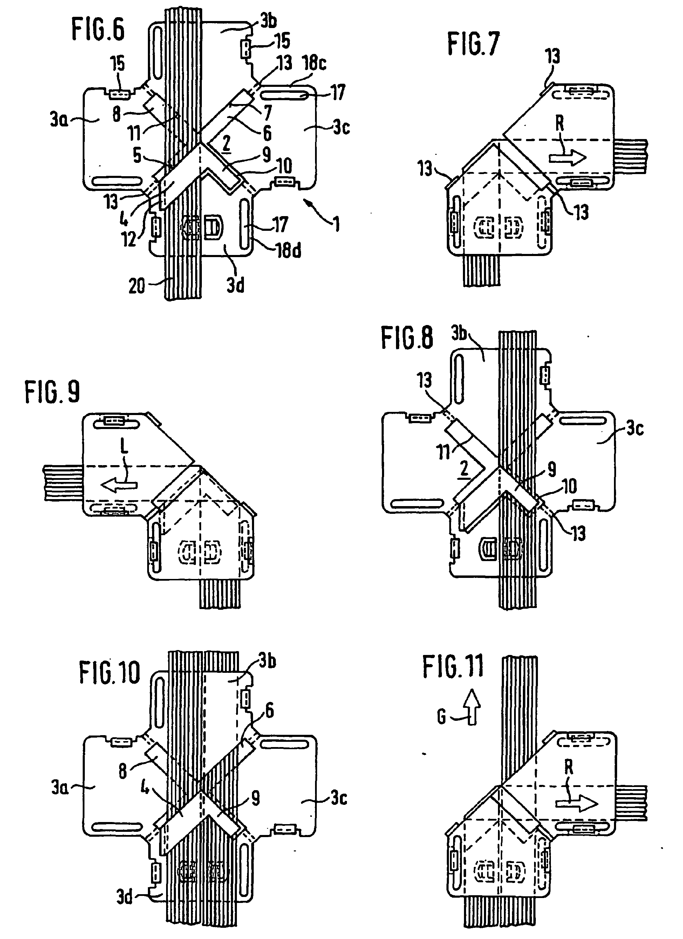

Soll das Band **20** nach rechts weggebogen werden, so muß es linksbündig entlang dem Quersteg **12** unter die Biegeplatte **4** geführt werden. Sodann werden die Fortsätze **3a** und **3b** entlang der Grundkante **7** um die geschwächt ausgebildeten Verbindungsstege **13** gefaltet, wobei das Flachbandkabel **20** von dem Fortsatz **3b** gleichzeitig um die Biegekante **5** in Richtung des Pfeiles **R** weggebogen wird (vgl. **Fig. 6 und 7**). Sobald die Fortsätze **3a** und **3b** auf die Fortsätze **3c** und **3d** abgesenkt sind, durchdringen die Rasthaken **15** die entsprechenden Schlitze **17** und schnappen nach elastischer Aufweitung der Federstege **18a** bis **18d** hinter diesen ein, so daß die besagten Fortsätze untereinander arretiert sind.

Soll das Band **20** nach links weggebogen werden, so muß es unter der rechten Biegeplatte **9** über das Mittelfeld **2** geführt werden. Sodann werden die Fortsätze **3b** und 3c entlang der Grundplatte **11** um die Verbindungsstege **13** gefaltet, wobei das Flachbandkabel **20** von dem Fortsatz 3c gleichzeitig um die Biegekante **10** in Richtung des Pfeiles L weggebogen wird (vgl. **Fig. 8 und 9**). Die Fortsätze werden dann - genau wie beim vorigen Verlegebeispiel - durch Einschnappen der Rasthaken **15** in den Schlitzen **17** untereinander arretiert und die Vorrichtung kann mit dem eingelegten Flachbandkabel **20** an der vorgesehenen Stelle auf einer Trägerplatte verankert oder festgeklebt werden.

Soll das Band **20** dagegen geradlinig verlegt werden, so muß es von dem Fortsatz **3d** aus unter die Biegeplatte **4** oder **9** und durch die Ausnehmung **6** oder **8** unter dem Fortsatz **3b** hindurchgeführt werden. Nach dem Zusammenfalten und Arretieren der Fortsätze kann die Vorrichtung in bekannter Weise auf der Trägerplatte verankert werden.

Wie aus **Fig. 10 und 11** ersichtlich, kann neben dem in Richtung des Pfeiles **G** geradlinig durchgeführten Flachbandkabel **20** noch ein zweites Flachbandkabel **20** nach rechts weggebogen werden, wenn dieses Kabel **20** gemäß **Fig. 10** linksbündig unter der Biegeplatte **4** geführt worden ist. Es versteht sich, daß auch das geradlinig zu verlegende Flachbandkabel **20** linksbündig durch das Mittelfeld **2** und den Fortsatz **3b** geführt werden kann, wenn gleichzeitig ein zweites Kabel **20** rechts vorbeigeführt und nach links weggebogen werden soll.

### Bezugszeichenliste

- 1: Grundplatte
- 2: Mittelfeld
- 3: Fortsätze
- 4: Biegeplatte
- 5: Biegekante
- 6: Ausnehmung
- 7: Grundkante
- 8: Ausnehmung
- 9: Biegeplatte
- 10: Biegekante
- 11: Grundkante
- 12: Quersteg
- 13: Verbindungsstege
- 14: Seitenkanten
- 15: Rasthaken
- 16: Seitenkanten
- 17: Schlitze
- 18: Federstege
- 19: Befestigungsfuß
- 20: Flachbandkabel

## Patentansprüche

1. Vorrichtung zur Befestigung von Flachbandkabeln **(20)** an einer Trägerplatte, bestehend aus einer kreuzförmig ausgebildeten, flachen Grundplatte **(1)** aus hartelastischem Kunststoff mit einem viereckigen Mittelfeld **(2),** von dem aus sich vier Fortsätze **(3a, 3b, 3c, 3d)** paarweise einander gegenüberliegend erstrecken, und einer diagonal durch das Mittelfeld **(2)** verlaufenden Ausnehmung **(6),** um welche die Fortsätze derart faltbar sind, daß jeweils zwei benachbarte Fortsätze **(3a, 3b)** und **(3c, 3d)** zur Deckung gelangen und in dieser Stellung arretierbar sind, wobei sich über einen Teil des Mittelfeldes **(2)** eine zum Umbiegen des Flachbandkabels **(20)** dienende Platte **(4)** erhebt, deren Biegekante **(5)** parallel zur Grundkante **(7)** der Ausnehmung **(6)** verläuft, **dadurch gekennzeichnet, daß** die Ausnehmung **(6)** von einer zweiten diagonal verlaufenden Ausnehmung **(8)** gekreuzt wird, um welche die Fortsätze in jeweils anderer Paarung faltbar sind, und daß an die Biegeplatte **(4)** eine zweite Biegeplatte **(9)** angewinkelt ist, deren Biegekante **(10)** parallel zur Grundkante **(11)** der zweiten Ausnehmung **(8)** verläuft.

2. Vorrichtung nach Anspruch 1, **dadurch gekennzeichnet, daß** die Biegeplatte **(4)** mit der Grundplatte **(1)** durch einen Quersteg **(12)** verbunden ist, welcher seitlich an einem der Fortsätze ( **3a** bis **3d )** parallel zur Mittelachse angeformt ist.

3. Vorrichtung nach Anspruch 1 oder 2, **dadurch gekennzeichnet, daß** der Abstand **a** der Biegeplatte **(4)** von der Grundplatte **(1)** etwa gleich der Dicke **d** des zu befestigenden Flachbandkabels **(20)** ist.

4. Vorrichtung nach einem der Ansprüche 1 bis 3, **dadurch gekennzeichnet, daß** jeweils zwei benachbarte Fortsätze ( **3a bis 3d )** beiderseits der Ausnehmungen **(6)** und **(8)** durch schwächer ausgebildete Vebindungsstege **(13)** faltbar miteinander verbunden sind.

## Claims

1. Device for fastening ribbon cables (20) to a support plate, comprising a cross-shaped flat base plate (1) made from hard elastic plastics with a rectangular central field (2) from which four projections (3a, 3b, 3c, 3d) extend opposing one another in pairs, and a recess (6) running diagonally through the central field (2), about which the projections are foldable such that, in each case, two adjacent projections (3a, 3b) and (3c, 3d) coincide and can be locked in this position, wherein a plate (4) serving for bending the ribbon cable (20) over rises above part of the central field (2), the bending edge (5) of said plate running parallel to the base edge (7) of the recess (6), **characterised in that** the recess (6) is crossed by a second recess (8) running diagonally, about which the projections can be folded in different pairings in each case, and that angled to the bending plate (4) is a second bending plate (9) whose bending edge (10) runs parallel to the base edge (11) of the second recess (8).

2. Device according to claim 1, **characterised in that** the bending plate (4) is connected to the base plate (1) by means of a transverse web (12) formed laterally on one of the projections (3a to 3d) parallel to the central axis.

3. Device according to claim 1 or 2, **characterised in that** the separation a of the bending plate (4) from the base plate (1) is approximately equal to the thickness d of the ribbon cable (20) to be fastened.

4. Device according to one of the claims 1 to 3, **characterised in that** two adjacent projections (3a to 3d) are foldably connected, in each case, on either side of the recesses (6) and (8) by more weakly formed connecting webs (13).

## Revendications

1. Dispositif de fixation de câbles plats (20) sur une plaque faisant office de support, se composant d'une platine formant assise (1) en forme de croix, réalisée dans une matière plastique à cédage élastique dur, comprenant une portion centrale carrée (2) d'où partent quatre prolongements (3a, 3b, 3c, 3d) à disposition diamétralement opposée par paires et un évidement (6) s'étendant suivant une orientation diagonale au travers de la portion centrale (2), au niveau duquel les prolongements peuvent être repliés dans des conditions telles que respectivement deux prolongements voisins (3a, 3b) et (3c, 3d) peuvent être amenés en coïncidence de recouvrement et peuvent être immobilisés dans cette position, une plaque (4) servant à replier le câble plat (20) se dressant en l'occurrence au-dessus d'une partie de la portion centrale, plaque dont l'arête de pliage (5) est orientée parallèlement à l'arête de base (7) de l'évidement (6), **caractérisé en ce que** l'évidement (6) est coupé, selon une disposition croisée, par un deuxième évidement à orientation diagonale (8), le long duquel les prolongements peuvent être repliés respectivement dans la proportion d'une autre paire et **en ce qu'**au niveau de la plaque de pliage (4), une deuxième plaque de pliage (9) est disposée suivant un agencement en angle droit, dont l'arête de pliage (10) est orientée parallèlement à l'arête de base (11) du deuxième évidement.

2. Dispositif selon la revendication 1, **caractérisé en ce que** la plaque de pliage (4) est raccordée à la platine formant assise (1) par une barrette entretoise transversale (12), réalisée, dans le plan latéral, solidaire par moulage de l'un des prélèvements (3a à 3d), parallèlement à l'axe médian.

3. Dispositif selon les revendications 1 ou 2, **caractérisé en ce que** l'intervalle de séparation a entre la plaque de pliage (4) et la platine formant assise (1) est sensiblement égal à l'épaisseur d du câble plat (20) à fixer.

4. Dispositif selon l'une des revendications 1 à 3, **caractérisé en ce que** respectivement deux prolongements voisins (3a à 3d) sont, de part et d'autre des évidements (6) et (8), reliés ensemble, avec la possibilité d'être repliés, par l'intermédiaire de barrettes entretoises de liaison (13) présentant une résistance mécanique plus faible.
